# EUROPEAN PATENT SPECIFICATION

(11) **EP 1 814 428 B1**
(45) Date of publication and mention of the grant of the patent: **16.01.2008**
(21) Application number: 05824077.1
(22) Date of filing: 21.11.2005
(51) Int. Cl.: A47J 43/24

(54) **FLEXIBLE COLANDER**
FLEXIBLES SIEB
PASSOIRE SOUPLE

(30) Priority: 19.11.2004 IT MI20042223
(43) Date of publication of application: 08.08.2007
(73) Proprietor: Pavoni Italia S.p.a., 24040 Suisio (BG) (IT)
(72) Inventor: RAINERI, Paolo, I-24100 Bergamo (IT)
(74) Representative: Premru, Rok
(86) International application number: PCT/IB2005/003479
(87) International publication number: WO 2006/054168

(56) References cited:
- GB-A- 2 369 589
- US-A- 3 170 875

## Description

This invention relates to a colander wholly made of a flexible material.

Separation of certain foodstuffs, such as pasta or vegetables from cooking water is known to be obtained by using a colander.

Prior art colanders are made of metal, plastic or other inflexible materials.

They generally have the shape of a spherical bowl, into which foodstuffs and cooking water are poured together, and include a plurality of through holes formed on the bottom or side surface of said bowl for draining cooking water as food is strained.

Prior art colanders also have support means, generally a plurality of feet, to assure stability of the colander on a horizontal plane.

Furthermore, these colanders generally have one or more handles for holding them.

However, prior art colanders have various drawbacks.

Particularly, these colanders are rigid and poorly adaptable to various operating conditions.

They further have a large size when not in use and when stored in their cupboards.

Also, the handles of stainless steel colanders tend to heat up during straining, and may cause the user to be burnt thereby.

GB-A-2 369 589 discloses a colander made of plastic.

The object of this invention is to obviate at least some of prior art drawbacks and particularly the drawbacks set out hereinbefore.

This object is achieved by a colander according to the features of claim 1, and by use of an elastomer according to the features of claim 10.

Further advantages may be achieved by the additional features of the dependent claims.

A possible embodiment of the colander, as claimed in the attached claims, will be described hereafter with reference to the accompanying drawings, in which:

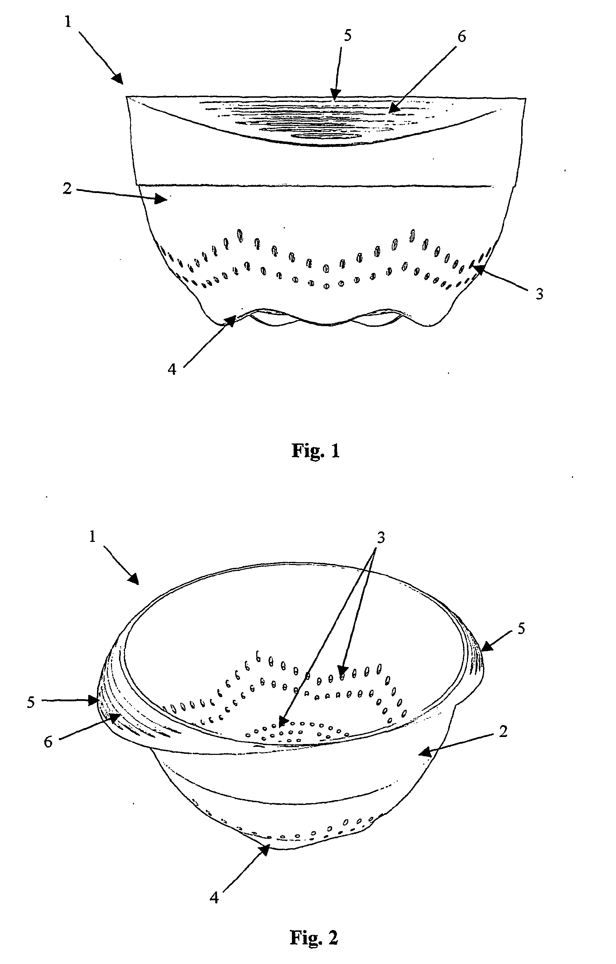

- Fig. 1 is a side view of the colander;
- Fig. 2 is a perspective view of the colander.

Referring to the drawings, numeral 1 generally designates a colander which comprises a spherical bowl-shaped container 2 having a plurality of through holes 3 on the bottom and/or side surfaces of the container, for draining water during straining.

The main feature of this patent is that the colander is wholly made of a flexible material, a flexible material being intended herein as a material that can recover important strains (50% minimum) with a hardness of 30 to 90 Shore A.

The materials used are preferably elastomers and more preferably silicone elastomers.

Silicone rubbers are not only suitable for their mechanical flexibility properties but also for their ability to maintain their mechanical properties in a wide range of temperatures (approximately -40°C to +250°C) and for their low heat conductivity.

Products made of this material are fabricated by molding a liquid or solid silicone elastomer-based mixture and subsequently cross-linking it, to provide the product with adequate elastic properties.

The colander is preferably made of silicone elastomers which use platinum as a catalyst in the cross-linking process.

The cross-linking process is carried out by adding appropriate catalysts to the elastomer mixture.

Platinum is a particularly advantageous catalyst, as it is non-toxic and prevents the generation of offensive smells.

Therefore, this catalyst is particularly suitable for products designed to come in direct contact with food.

Typically, the cross-linking process may occur at a temperature of 150°C to 200°C for 30 seconds to 300 seconds.

Those skilled in the art may obviously appreciate that other flexible materials may be used, particularly thermoplastic rubbers, such as Santoprene, Thermoplast K, etc.

The flexibility imparted by the flexible material allows a more versatile use of the colander as a kitchen tool, due to its ability of being bent and adapted to various conditions of use.

For instance, the colander may be adapted to the openings of variously sized pots and used even in small sinks.

This colander further allows a better separation of the cooking water from foodstuffs, which may be directly strained in the colander container to facilitate water drain.

The colander turns to a considerably smaller size when it is stored and not used.

Its material further allows to fabricate low-cost colanders in a wide range of colors.

The colander made of flexible material is further easily washable.

The low heat conductivity of silicone rubbers or thermoplastic rubbers or elastomers further reduces the risk that the user may be burnt thereby, avoiding the use of insulating means for the colander handle.

According to the embodiment illustrated herein, the container 2 of the colander 1 has support means 4 at its bottom to stabilize the colander on a horizontal plane.

These support means 4 preferably consist of a ring-shaped member having a wavy profile, which provides a higher stability to the colander, even under load and assures water drainage during straining.

The container 2 preferably has two handles 5 at its top for holding the colander 1.

In the embodiment that is shown in the figures, the handles 5 are defined by two flaps, projecting from the upper rim of the spherical bowl which defines the colander and having a slightly arched profile.

Thus, the handles 5 also act as self-supporting elements of the spherical bowl 2.

The handles 5 are preferably shaped like half-moons, and may have non-slip protrusions 6, assuring a safer grip.

## Claims

1. A colander (1) comprising a bowl-shaped container (2) having a plurality of through holes (3) for drainage, **characterized in that** it is wholly made of a flexible material having a hardness of 30 to 90 Shore A.

2. A colander as claimed in claim 1, **characterized in that** it is made of elastomers.

3. A colander as claimed in claim 2, **characterized in that** it is made of silicone elastomers.

4. A colander as claimed in claim 3, **characterized in that** it is made of silicone elastomers obtained by a platinum-catalyzed cross-linking process.

5. A colander as claimed in claim 2, **characterized in that** it is made of thermoplastic rubber.

6. A colander as claimed in any one of the preceding claims, **characterized in that** said container (2) has support means (4) consisting of a ring having a wavy profile.

7. A colander as claimed in any one of the preceding claims, **characterized in that** said container (2) has two flap-like handles (5) projecting out of the upper rim of said container (2).

8. A colander as claimed in claim 7, **characterized in that** said handles (5) are shaped like half-moons and have an arched profile.

9. A colander as claimed in claim 7 or 8, **characterized in that** said handles (5) have non-slip protrusions (6).

10. A use of an elastomer having an hardness of 30 to 90 Shore A to make a colander.

11. A use of an elastomer as claimed in claim 10, **characterized in that** said elastomer is a silicone elastomer.

12. A use of an elastomer as claimed in claim 11, **characterized in that** said silicone elastomer is obtained by a platinum-catalyzed cross-linking process.

13. A use of an elastomer as claimed in claim 10, **characterized in that** said elastomer is a thermoplastic rubber.

## Patentansprüche

1. Ein Sieb (1), das einen schüsselförmigen Behälter (2) mit einer Vielzahl durchgehender Löcher (3) zum Abfließen umfasst, **dadurch gekennzeichnet, dass** es vollständig aus einem biegsamen Material mit einer Härte von 30 bis 90 Shore A hergestellt ist.

2. Ein Sieb wie in Anspruch 1 beansprucht, **dadurch gekennzeichnet, dass** es aus Elastomeren hergestellt ist.

3. Ein Sieb wie in Anspruch 2 beansprucht, **dadurch gekennzeichnet, dass**
es aus Silikonelastomeren hergestellt ist .

4. Ein Sieb wie in Anspruch 3 beansprucht, **dadurch gekennzeichnet, dass**
es aus Silikonelastomeren hergestellt ist, die durch ein mit Platin
katalysiertes Quervernetzungsverfahren gewonnen werden.

5. Ein Sieb wie in Anspruch 2 beansprucht, **dadurch gekennzeichnet, dass**
es aus thermoplastischem Kautschuk hergestellt ist.

6. Ein Sieb wie in irgendeinem der obigen Ansprüche beansprucht,
**dadurch gekennzeichnet, dass** der Behälter (2) Stützmittel (4) hat, die
aus einem Ring mit einem welligen Profil bestehen.

7. Ein Sieb wie in irgendeinem der obigen Ansprüche beansprucht,
**dadurch gekennzeichnet, dass** der Behälter (2) zwei flügelähnliche Griffe
(5) hat, die vom oberen Rand des Behälters (2) abstehen.

8. Ein Sieb wie in Anspruch 7 beansprucht, **dadurch gekennzeichnet, dass**
die Griffe (5) halbmondförmig sind und ein gekrümmtes Profil haben.

9. Ein Sieb wie in Anspruch 7 oder 8 beansprucht, **dadurch**
**gekennzeichnet, dass** die Griffe (5) rutschfeste Vorsprünge (6) haben.

10. Eine Verwendung eines Elastomers mit einer Härte von 30 bis 90 Shore
A, um ein Sieb herzustellen.

11. Eine Verwendung eines Elastomers wie in Anspruch 10 beansprucht,
**dadurch gekennzeichnet, dass** das Elastomer ein Silikonelastomer ist.

12. Eine Verwendung eines Elastomers wie in Anspruch 11 beansprucht,
**dadurch gekennzeichnet, dass** das Silikonelastomer durch ein durch Platin
katalysiertes Quervernetzungsverfahren gewonnen wird.

13. Eine Verwendung eines Elastomers wie in Anspruch 10 beansprucht,
**dadurch gekennzeichnet, dass** das Elastomer ein thermoplastischer
Kautschuk ist.

## Revendications

1. Passoire (1) comprenant un récipient en forme de saladier (2) ayant une pluralité d'orifices traversants (3) pour l'égouttage, **caractérisée en ce qu'**elle est entièrement réalisée en matière souple ayant une dureté de 30 à 90 Shore A.

2. Passoire selon la revendication 1, **caractérisée en ce qu'**elle est réalisée en élastomères.

3. Passoire selon la revendication 2, **caractérisée en ce qu'**elle est réalisée en élastomères de silicone.

4. Passoire selon la revendication 3, **caractérisée en ce qu'**elle est réalisée en élastomères de silicone obtenus par un procédé de réticulation avec catalyse au platine.

5. Passoire selon la revendication 1, **caractérisée en ce qu'**elle est réalisée en caoutchouc thermoplastique.

6. Passoire selon l'une quelconques des revendications précédentes, **caractérisée en ce que** ledit récipient (2) a des moyens de support (4) consistant en un anneau ayant un profil en vague.

7. Passoire selon l'une quelconques des revendications précédentes, **caractérisée en ce que** ledit récipient (2) a des poignées (5) formant ailettes dépassant du bord supérieur dudit récipient (2).

8. Passoire selon la revendication 7, **caractérisée en ce que** lesdites poignées (5) sont en forme de demi-lunes et ont un profil arqué.

9. Passoire selon l'une des revendications 7 ou 8, **caractérisée en ce que** lesdites poignées (5) ont des saillies anti-dérapantes (6).

10. Utilisation d'un élastomère ayant une dureté de 30 à 90 Shore A pour faire une passoire.

11. Utilisation d'un élastomère selon la revendication 10, **caractérisée en ce que** ledit élastomère est un élastomère de silicone.

12. Utilisation d'un élastomère selon la revendication 11, **caractérisée en ce que** ledit élastomère de silicone est obtenu par un procédé de réticulation avec catalyse au platine.

13. Utilisation d'un élastomère selon la revendication 10, **caractérisée en ce que** ledit élastomère est un caoutchouc thermoplastique.
